(19) Europäisches Patentamt / European Patent Office / Office européen des brevets

(11) **EP 3 608 826 A1**

(12) **EUROPEAN PATENT APPLICATION**

(43) Date of publication:
**12.02.2020 Bulletin 2020/07**

(51) Int Cl.:
***G06F 30/00*** *(2020.01)*

(21) Application number: **19190946.4**

(22) Date of filing: **09.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2018 US 201816059817**

(71) Applicant: **Dassault Systemes Simulia Corp. Johnston, RI 02919 (US)**

(72) Inventors:
- **KRISHNAMURTHY, Nagendra**
  **Woburn, MA 01801 (US)**
- **D ALESSIO, Luca**
  **Medford, MA 02155 (US)**
- **ZHANG, Raoyang**
  **Burlington, MA 01803 (US)**
- **CHEN, Hudong**
  **Newton, MA 02465 (US)**

(74) Representative: **Conroy, John**
**Fish & Richardson P.C.**
**Highlight Business Towers**
**Mies-van-der-Rohe-Straße 8**
**80807 München (DE)**

(54) **IMPROVING THE PERFORMANCE AND ACCURACY OF STABILITY EXPLICIT DIFFUSION**

(57) Methods, computer program products, and systems can be used to simulate physical processes. One of the methods includes determining an input flux to be applied to a first element. The method includes determining an applied flux, the applied flux being an amount of flux that can be applied to the first element without causing numerical instability. The method includes determining a balance flux, the balance flux being the difference between the input flux and the applied flux. The method also includes providing the balance flux to a second element.

FIG. 8

EP 3 608 826 A1

**Description**

BACKGROUND

High Reynolds number flow has been simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

SUMMARY

In general, one innovative aspect of the subject matter described in this specification can be embodied in methods that include the act of determining an input flux to be applied to a first element. The methods include the act of determining an applied flux, the applied flux being an amount of flux that can be applied to the first element without causing numerical instability. The method includes the act of determining a balance flux, the balance flux being the difference between the input flux and the applied flux. The method also includes the act of providing the balance flux to a second element.

Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other embodiments can each optionally include one or more of the following features, alone or in combination. The second element may be determined based on the direction of a scalar gradient. A method may include the act of providing at least a portion of the balance flux to a third element. Determining an input flux to be applied to a first element may include identifying heat flux applied to each of the faces of the first elements. Determining an applied flux may include determining that applying the corresponding heat flux to at least one of the faces would result in a numerical instability. The physical process may be one of heat flow in power generation equipment like engines; heat flow in turbo machinery; heat flow in electromagnetic machinery; waste heat management from electronic equipment; thermal management and protection of sensors and actuators; thermal driven stress and fatigue; thermal driven mechanical shock; thermal driven chemical changes in solids; thermal driven demagnetization; combined electrical heat generation and heat flow in conductors; heat generation and conduction in semiconductors; heat and current flow in thermoelectric devices; thermal driven dimensional changes; heat sinks; solid conduction in heat exchangers; thermal energy storage in single phase and phase change materials; detailed heat flow in composite structures like PCBs, tires, and reinforced concrete; electic heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIGS. 1 and 2 illustrate velocity components of two LBM models.
FIG. 3 is a flow chart of a procedure followed by a physical process simulation system.
FIG. 4 is a perspective view of a microblock.
FIGS. 5A and 5B are illustrations of lattice structures used by the system of FIG. 3.
FIGS. 6 and 7 illustrate variable resolution techniques.
FIG. 8 illustrates an example of dividing the heat flux of an element into an applied flux and a balance flux.
FIG. 9 illustrates and example of successively transmitting the balance flux across multiple elements.
FIG. 10 illustrates an element 1000 during the application of heat flux.

Like reference numbers and designations in the various drawings indicate like elements.

DETAILED DESCRIPTION

This invention relates to computer simulation of physical processes, such as fluid flow.

In a LBM-based physical process simulation system, fluid flow may be represented by the distribution function values $f_i$, evaluated at a set of discrete velocities $c_i$. The dynamics of the distribution function is governed by the equation below, where $f_i(0)$ is known as the equilibrium distribution function, defined as:

$$f_\alpha^{(0)} = w_\alpha \rho \left[ 1 + u_\alpha + \frac{u_\alpha^2 - u^2}{2} + \frac{u_\alpha(u_\alpha^2 - 3u^2)}{6} \right]$$

This equation is the well-known lattice Boltzmann equation that describe the time-evolution of the distribution function, $f_i$. The left-hand side represents the change of the distribution due to the so-called "streaming process." The streaming process is when a pocket of fluid starts out at a grid location, and then moves along one of the velocity vectors to the next grid location. At that point, the "collision factor," i.e., the effect of nearby pockets of fluid on the starting pocket of fluid, is calculated. The fluid can only move to another grid location, so the proper choice of the velocity vectors is necessary so that all the components of all velocities are multiples of a common speed.

The right-hand side of the first equation is the aforementioned "collision operator" which represents the change of the distribution function due to the collisions among the pockets of fluids. The particular form of the collision operator used here is due to Bhatnagar, Gross and Krook (BGK). It forces the distribution function to go to the prescribed values given by the second equation, which is the "equilibrium" form.

From this simulation, conventional fluid variables, such as mass $\rho$ and fluid velocity u, are obtained as simple summations. Here, the collective values of $c_i$ and $w_i$ define a LBM model. The LBM model can be implemented efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken.

In a fluid system, a small disturbance of the density travels at the speed of sound. In a gas system, the speed of the sound is generally determined by the temperature. The importance of the effect of compressibility in a flow is measured by the ratio of the characteristic velocity and the sound speed, which is known as the Mach number.

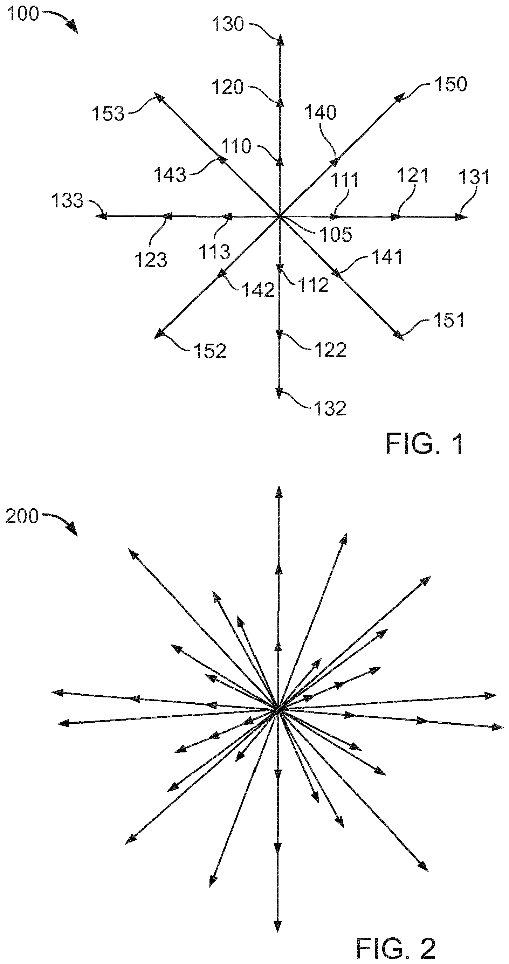

Referring to FIG. 1, a first model (2D-1) 100 is a two-dimensional model that includes 21 velocities. Of these 21 velocities, one (105) represents particles that are not moving; three sets of four velocities represent particles that are moving at either a normalized speed ($r$) (110-113), twice the normalized speed (2r) (120-123), or three times the normalized speed (3r) (130-133) in either the positive or negative direction along either the $x$ or $y$ axis of the lattice; and two sets of four velocities represent particles that are moving at the normalized speed ($r$) (140-143) or twice the normalized speed (2$r$) (150-153) relative to both of the $x$ and $y$ lattice axes.

As also illustrated in FIG. 2, a second model (3D-1) 200 is a three-dimensional model that includes 39 velocities, where each velocity is represented by one of the arrowheads of FIG. 2. Of these 39 velocities, one represents particles that are not moving; three sets of six velocities represent particles that are moving at either a normalized speed (r), twice the normalized speed (2r), or three times the normalized speed (3r) in either the positive or negative direction along the $x, y$ or $z$ axis of the lattice; eight represent particles that are moving at the normalized speed (r) relative to all three of the $x, y, z$ lattice axes; and twelve represent particles that are moving at twice the normalized speed (2r) relative to two of the $x, y, z$ lattice axes.

More complex models, such as a 3D-2 model includes 101 velocities and a 2D-2 model includes 37 velocities also may be used. The velocities are more clearly described by their component along each axis as documented in Tables 1 and 2 respectively.

For the three-dimensional model 3D-2, of the 101 velocities, one represents particles that are not moving (Group 1); three sets of six velocities represent particles that are moving at either a normalized speed (r), twice the normalized speed (2r), or three times the normalized speed (3r) in either the positive or negative direction along the $x, y$ or $z$ axis of the lattice (Groups 2, 4, and 7); three sets of eight represent particles that are moving at the normalized speed (r), twice the normalized speed (2r), or three times the normalized speed (3r) relative to all three of the $x, y, z$ lattice axes (Groups 3, 8, and 10); twelve represent particles that are moving at twice the normalized speed (2r) relative to two of the $x, y, z$ lattice axes (Group 6); twenty four represent particles that are moving at the normalized speed (r) and twice the normalized speed (2r) relative to two of the $x, y, z$ lattice axes, and not moving relative to the remaining axis (Group 5); and twenty four represent particles that are moving at the normalized speed (r) relative to two of the $x, y, z$ lattice axes and three times the normalized speed (3r) relative to the remaining axis (Group 9).

For the two-dimensional model 2D-2, of the 37 velocities, one represents particles that are not moving (Group 1); three sets of four velocities represent particles that are moving at either a normalized speed (r), twice the normalized speed (2r), or three times the normalized speed (3r) in either the positive or negative direction along either the x or y axis of the lattice (Groups 2, 4, and 7); two sets of four velocities represent particles that are moving at the normalized speed (r) or twice the normalized speed (2r) relative to both of the x and y lattice axes; eight velocities represent particles that are moving at the normalized speed (r) relative to one of the x and y lattice axes and twice the normalized speed (2r) relative to the other axis; and eight velocities represent particles that are moving at the normalized speed (r) relative to one of the x and y lattice axes and three times the normalized speed (3r) relative to the other axis.

The LBM models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the lattice Boltzmann models. Using such models, flows can be simulated with high fidelity.

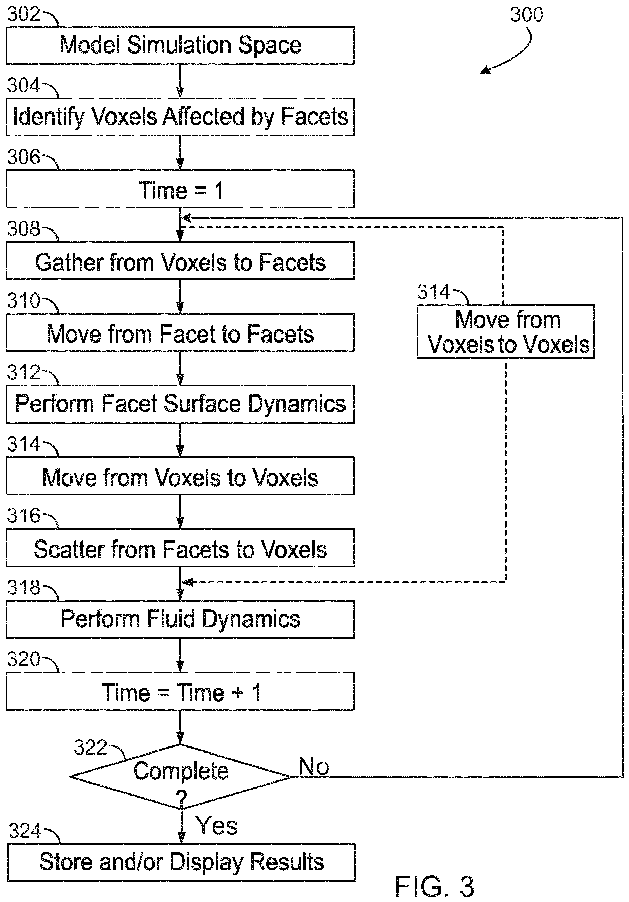

Referring to FIG. 3, a physical process simulation system operates according to a procedure 300 to simulate a physical process such as fluid flow. Prior to the simulation, a simulation space is modeled as a collection of voxels (step 302). Typically, the simulation space is generated using a computer-aided-design (CAD) program. For example, a CAD program could be used to draw an micro-device positioned in a wind tunnel. Thereafter, data produced by the CAD program is processed to add a lattice structure having appropriate resolution and to account for objects and surfaces within the simulation space.

The resolution of the lattice may be selected based on the Reynolds number of the system being simulated. The Reynolds number is related to the viscosity (v) of the flow, the characteristic length (L) of an object in the flow, and the characteristic velocity (u) of the flow:

$$Re = uL/v.$$

The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as $f_i(x, t)$, where $f_i$ represents the number of elements, or particles, per unit volume in state i (i.e., the density of particles in state i) at a lattice site denoted by the three-dimensional vector x at a time t. For a known time increment, the number of particles is referred to simply as $f_i(x)$. The combination of all states of a lattice site is denoted as $f(x)$.

The number of states is determined by the number of possible velocity vectors within each energy level. The velocity vectors consist of integer linear speeds in a space having three dimensions: x, y, and z. The number of states is increased for multiple-species simulations.

Each state i represents a different velocity vector at a specific energy level (i.e., energy level zero, one or two). The velocity $c_i$ of each state is indicated with its "speed" in each of the three dimensions as follows:

$$c_i = (c_{i,x},\ c_{i,y},\ c_{i,z}).$$

The energy level zero state represents stopped particles that are not moving in any dimension, i.e. $c_{stopped}=(0, 0, 0)$. Energy level one states represent particles having a $\pm 1$ speed in one of the three dimensions and a zero speed in the other two dimensions. Energy level two states represent particles having either a $\pm 1$ speed in all three dimensions, or a $\pm 2$ speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states.).

Each voxel (i.e., each lattice site) is represented by a state vector f(x). The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

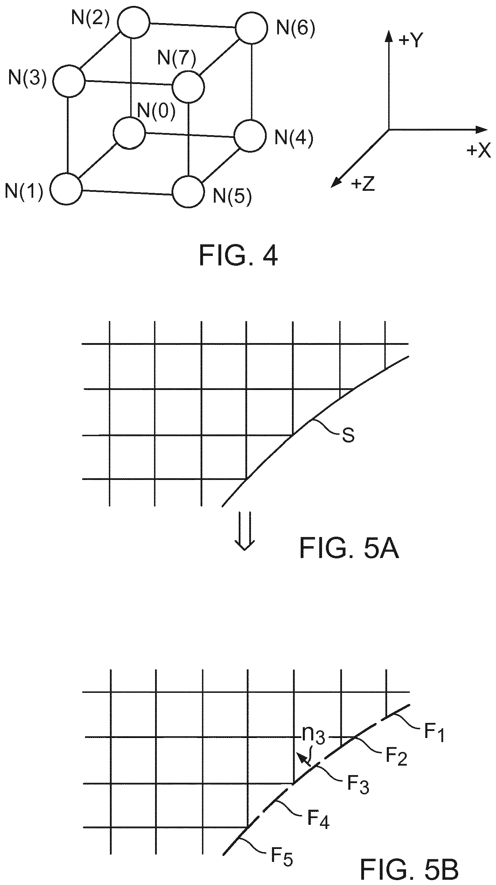

A short-hand notation for the voxels in the microblock is defined as $N_i(n)$, where n represents the relative position of the lattice site within the microblock and $n \in \{0,1,2, \ldots , 7\}$. A microblock is illustrated in FIG. 4.

Referring to FIGs. 5A and 5B, a surface S (FIG. 3A) is represented in the simulation space (FIG. 5B) as a collection of facets $F_\alpha$ :

$$S=\{F_\alpha\}$$

where $\alpha$ is an index that enumerates a particular facet. A facet is not restricted to the voxel boundaries, but is typically sized on the order of or slightly smaller than the size of the voxels adjacent to the facet so that the facet affects a relatively small number of voxels. Properties are assigned to the facets for the purpose of implementing surface dynamics. In particular, each facet $F_\alpha$ has a unit normal ($n_\alpha$), a surface area ($A_\alpha$), a center location ($x_\alpha$), and a facet distribution function ($f_i(\alpha)$) that describes the surface dynamic properties of the facet.

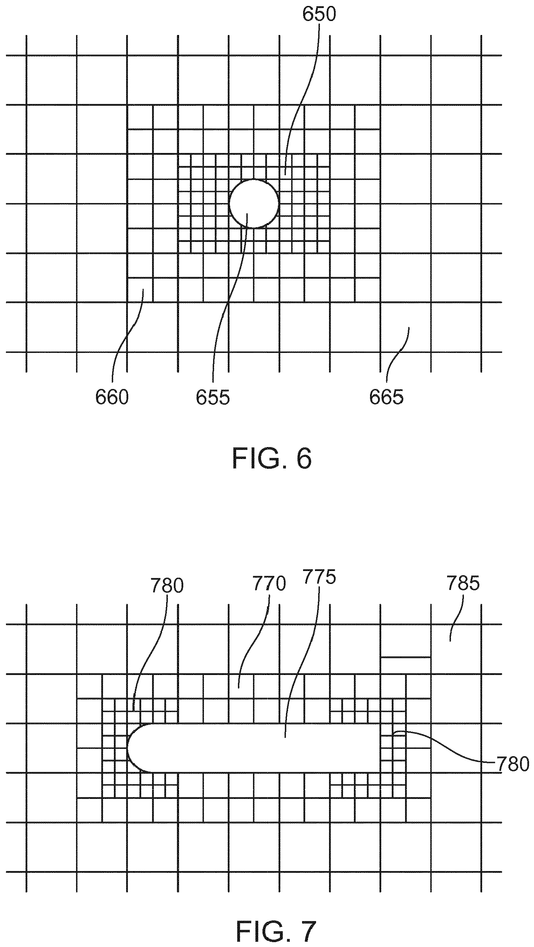

Referring to FIG. 6, different levels of resolution may be used in different regions of the simulation space to improve processing efficiency. Typically, the region 650 around an object 655 is of the most interest and is therefore simulated with the highest resolution. Because the effect of viscosity decreases with distance from the object, decreasing levels of resolution (i.e., expanded voxel volumes) are employed to simulate regions 660, 665 that are spaced at increasing distances from the object 655. Similarly, as illustrated in FIG. 7, a lower level of resolution may be used to simulate a region 770 around less significant features of an object 775 while the highest level of resolution is used to simulate regions 780 around the most significant features (e.g., the leading and trailing surfaces) of the object 775. Outlying regions 785 are simulated using the lowest level of resolution and the largest voxels.

**Identify Voxels Affected By Facets**

Referring again to FIG. 3, once the simulation space has been modeled (step 302), voxels affected by one or more facets are identified (step 304). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor $P_f(x)$ indicates the portion of the voxel that is unaffected by the facet (i.e., the portion that can be occupied by a fluid or other materials for which flow is being simulated). For non-intersected voxels, $P_f(x)$ equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

**Perform Simulation**

Once the voxels that are affected by one or more facets are identified (step 304), a timer is initialized to begin the simulation (step 306). During each time increment of the simulation, movement of particles from voxel to voxel is simulated by an advection stage (steps 308-316) that accounts for interactions of the particles with surface facets. Next, a collision stage (step 318) simulates the interaction of particles within each voxel. Thereafter, the timer is incremented (step 320). If the incremented timer does not indicate that the simulation is complete (step 322), the advection and collision stages (steps 308-320) are repeated. If the incremented timer indicates that the simulation is complete (step 322), results of the simulation are stored and/or displayed (step 324).

**Scalar Diffusion**

Numerical simulation of diffusion dominated physical phenomena is very common due to application in conductive heat transfer, mass diffusion, electrical conduction etc. The governing equations for these phenomena are formulated as a set of partial differential equations (PDEs) comprising of unsteady diffusion and volumetric source terms. Numerical solutions involve discretizing the spatial domain of interest and then utilizing time-integration techniques to advance the solution in time. The spatial discretization is usually accomplished using highly automated grid generation tools, whereas the temporal discretization (time-step size) needs to be chosen carefully to ensure stability and accuracy of the numerical solution at an acceptable numerical cost. In particular, the stability characteristic (Courant-Friedrichs-Lewy (CFL) constraint) of the time-marching scheme determines the largest time-step size that can be used without making the solution unstable. Two types of time-marching schemes are commonly employed - implicit and explicit. On one hand, implicit methods satisfy the CFL constraint by construction, and hence large time-steps can be used without making the solution unstable (however too large time-steps generally lead to inaccurate results). Implicit methods require solution of a large system of matrix coefficients, thus making their implementation both non-trivial and computationally expensive. Explicit methods, on the other hand, are very simple to implement, computationally inexpensive (per iteration) and highly parallelizable, but need to satisfy a stringent CFL constraint. This constraint for explicit diffusion scheme dictates that the CFL number given by $\kappa \Delta_t / \Delta_x^2$ is less than a certain limit (which is O(1)), where $\kappa$ is the diffusivity, $\Delta_x$ is the size of the smallest spatial grid and $\Delta_t$ is the time-step. In other words, if the spatial grid size $\Delta_x$ decreases anywhere in the domain by a factor $F$, the time-step $\Delta_t$ will have to decrease by $F^2$ in order to maintain numerical stability. Hence, explicit methods can require extremely small time-steps for spatial grids with small sized elements severely affecting the simulation performance. This is true even if the number of such small sized elements is very limited in the simulation domain - the smallest element in the entire domain determines the CFL condition and hence the time-step size. For practical problems involving complex geometries, using irregular grids is inevitable for surface and volume discretization. On these grids, $\Delta_x$ can vary significantly and the use of explicit schemes can become very inefficient due to the extremely small time-steps required by the CFL constraint. Therefore, explicit scheme practitioners spend a large amount of time and effort trying to improve the quality of spatial grids, attempting to alleviate the problem. Even then it is almost impossible to remove all small sized elements from any discretization of realistic geometry and as a result, small time-steps (at least locally) are the only way to make the solutions stable.

**Improved Diffusion for the Explicit Scheme**

To overcome the above mentioned deficiencies of the explicit scheme for diffusion problems on irregular grids, new modifications are introduced to the flux calculation between two neighboring elements when at least one of them would otherwise violate the CFL constraint. These modifications, as described next, are dependent on the material and geometric properties of the two elements as well as the existing state of quantity of interest in the immediate vicinity of the elements, and help stabilize the numerical solution irrespective of the size of the two elements and ensure spatio-temporal accuracy. When the two neighboring elements are large (and therefore satisfy the CFL constraint) the flux calculation reduces to the text-book implementation implying that the described approach is a consistent extension of the standard approach.

The explicit Euler scheme and a finite volume formulation is assumed. In the following example, the quantity of interest is temperature and the governing equation is the heat conduction equation, although it should be understood that any scalar quantity could be used with the appropriate governing equation. The numerical scheme requires the heat fluxes at all faces of an element to be computed. Subsequently, these fluxes are summed up and used to update the temperature of the element under consideration. Consider two face sharing neighboring elements $\alpha$ and $\beta$. According to the Fourier's law of thermal conduction the heat flux is:

$$q_m^{\beta \to \alpha} = k_m^{\alpha\beta} \left.\frac{\partial T}{\partial n}\right|_m^{\alpha\beta} \tag{1}$$

where $k_m^{\alpha\beta}$ is the thermal conductivity at the common face, $\left.\frac{\partial T}{\partial n}\right|_m^{\alpha\beta}$ is the temperature gradient normal to the common face and "$m$" is used to specify that the quantities are evaluated at time-step "$m$". The negative sign in the commonly used form of Fourier's law is dropped out since heat entering $\alpha$ is considered (instead of heat leaving $\alpha$). The temperature gradient used here is computed to ensure smoothness, especially in the presence of different sized elements. If the two neighboring elements $\alpha$ and $\beta$ satisfy the CFL constraint the energy transfer across the common face during a time-step $m$ to $m$+1 is obtained by multiplying the heat flux by the area of the common face, $A^{\alpha\beta}$, and the time-step size, $\Delta_t$, i.e.

$$Q_m^{\beta \to \alpha} = q_m^{\beta \to \alpha} A^{\alpha\beta} \Delta_t \tag{2}$$

In the traditional approach, the final temperature of element $\alpha$ at the end of the time-step is computed from the net energy transfer to $\alpha$ (sum of energy transfers from all faces):

$$T_{m+1}^{\alpha} = T_m^{\alpha} + \frac{1}{\rho_m^{\alpha} C_{p}{}_m^{\alpha} \forall^{\alpha}} \sum_i q_m^{\beta_i \to \alpha} A^{\alpha\beta} \Delta_t \qquad (3)$$

We note that equation (3) above states that the temperature change is proportional to the net heat flux and inversely proportional to the size of the element $\forall^{\alpha}$, i.e. for small elements the same net energy transfer results in larger temperature changes.

When the time-step $\Delta_t$ is large enough to violate the CFL constraint for at least one of the two elements, the above form could lead to numerical instability. In scenarios in which the element $\alpha$ is smaller than element $\beta$, the CFL constraint is violated for at least element $\alpha$. This numerical instability arises because, for the element $\alpha$ (which we have assumed to be small in size) it is incorrect to assume that the temperature gradients used to compute $q_m^{\beta_i \to \alpha}$ remain constant value throughout the duration of the time-step $\Delta_t$. As noted above, for the same net energy transfer the temperature change of small elements is larger, and hence standard explicit time integration requires that time-step be reduced to ensure that constant temperature gradient assumption is valid. Clearly for the given $\Delta_t$, this issue persists as long as unsteadiness in the problem exists, and goes away only at steady state when all the incoming and outgoing fluxes on every element balance each other out exactly.

As part of the new approach, we propose to sub-divide the term $q_m^{\beta \to \alpha}$ defined as in equation (1) into two parts: (1) an applied flux $q_m^{\beta \to \alpha}{}_{app}$ which will be used towards temperature evolution (in the summation above) of $\alpha$, and (2) a balance flux $q_m^{\beta \to \alpha}{}_{bal}$ which will be transmitted to the other side of the interface $\alpha\beta$ without changing temperature of element $\alpha$.

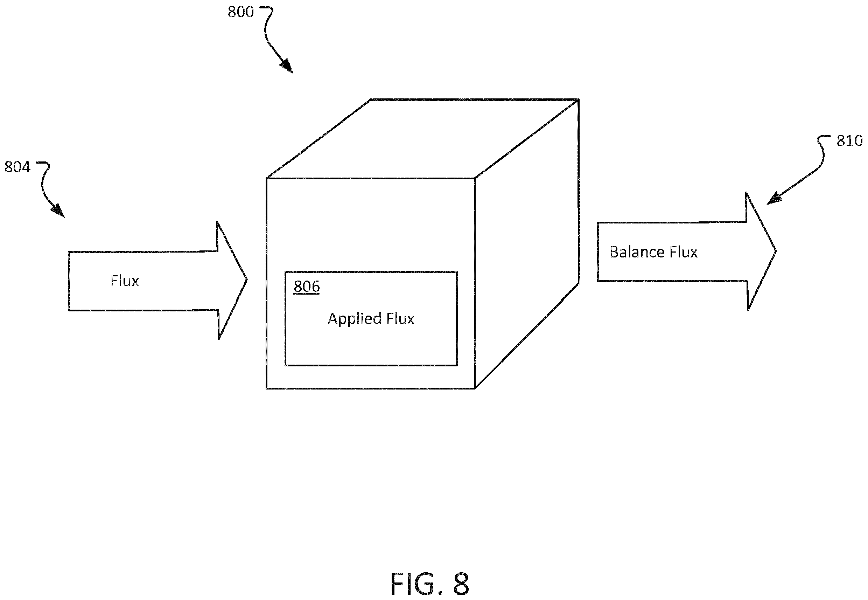

FIG. 8 illustrates an example of dividing the heat flux of an element into an applied flux and a balance flux. The element 800 receives the heat flux, as illustrated by the arrow 802. The heat flux 804 would conventionally be applied entirely to the element 800, resulting in a violation of the CFL constraint and resulting in instability. In this example, the heat flux 804 is divided into an applied flux 806 and a balance flux 810. Conceptually, the applied flux 806 is the amount of heat flux that can be applied to the element 800 without violating the CFL constraint. The balance flux 808 is difference between the heat flux 804 and the applied flux 806.

The applied flux 806 is applied to the element 800. The balance flux is transferred to downstream elements while receive heat flux from the element 800 (as represented by the arrows 808a-c).

In some implementations, the balance flux may be applied to the downstream elements at a timestep subsequent to the timestep in which the applied flux is applied to the element 800. That is, if the applied flux is applied to the element 800 at time t=1, then the balance flux may be applied to the downstream elements at some time t > 1.

The heat flux term $q_m^{\beta \to \alpha}$ can be expressed as follows:

$$q_m^{\beta \to \alpha}{}_{app} = q_m^{\beta \to \alpha} \left[ \frac{1 - \exp\left(-C_m^{\alpha\beta} \Delta_t\right)}{C_m^{\alpha\beta} \Delta_t} \right] + \Delta G \left[ \frac{1 - \exp\left(-C_m^{\alpha\beta} \Delta_t\right)}{\left(C_m^{\alpha\beta} \Delta_t\right)^2} - \frac{1}{C_m^{\alpha\beta} \Delta_t} \right] \qquad (4)$$

where, the terms $C_m^{\alpha\beta}$ and $\Delta G$ are given by:

$$C_m^{\alpha\beta} = \frac{k_m^{\alpha\beta} A^{\alpha\beta}}{d^{\alpha\beta}} \left( \frac{1}{\rho_m^{\alpha} C_{p}{}_m^{\alpha} \forall^{\alpha}} + \frac{1}{\rho_m^{\beta} C_{p}{}_m^{\beta} \forall^{\beta}} \right) \qquad (5)$$

$$\Delta G = \frac{k_m^{\alpha\beta}}{d^{\alpha\beta}} \left( \frac{\sum_{\gamma \neq \beta} q_{OLD}^{\gamma \to \alpha} A^{\alpha\gamma}}{\rho_m^\alpha C_{p\ m}^\alpha \forall^\alpha} + \frac{\sum_{\gamma \neq \alpha} q_{OLD}^{\gamma \to \beta} A^{\beta\gamma}}{\rho_m^\beta C_{p\ m}^\beta \forall^\beta} \right) \tag{6}$$

and,

$$q_{m\ bal}^{\beta \to \alpha} = q_m^{\beta \to \alpha} - q_{m\ app}^{\beta \to \alpha} \tag{7}$$

In the above equations, the geometric features are represented by $d^{\alpha\beta}$, the distance used in calculation of the temperature gradient, $\forall^\alpha$ and $\forall^\beta$, the element volumes and $A^{\alpha\beta}$, the area of the common face. The material properties are accounted for by $\rho_m^\alpha C_{p\ m}^\alpha$ and $\rho_m^\beta C_{p\ m}^\beta$ (here $\rho$ indicates the density and $C_p$ the specific heat) and $k_m^{\alpha\beta}$, the thermal conductivity. The flux terms in the summations $q_{OLD}^{\gamma \to \alpha}$ and $q_{OLD}^{\gamma \to \beta}$ give a reasonable estimate of the fluxes likely to exist at different faces on elements $\alpha$ and $\beta$, respectively.

The physical interpretation of the two flux terms $q_{m\ app}^{\beta \to \alpha}$ and $q_{m\ bal}^{\beta \to \alpha}$ is as follows.

The applied flux $q_{m\ app}^{\beta \to \alpha}$ represents the portion of the total flux $q_m^{\beta \to \alpha}$ (given by equation (1)) that can be used towards temperature evolution of the element $\alpha$ without introducing numerical instability. This form has been derived from first principles for an isolated system consisting of elements $\alpha$ and $\beta$ to include an estimate of the effect of a continuously evolving temperature field in the vicinity of this system. For this reason, this term shows dependence both on the geometric/thermal properties of the elements $(C_m^{\alpha\beta})$, as well as the interaction of these elements with the surroundings ($\Delta G$).

It should be noted in equation (4) that $q_{m\ app}^{\beta \to \alpha}$ still depends on fluxes observed at other faces at the previous time-step to provide an estimate of the ongoing interaction at those faces during the current time-step. For strongly transient problems, this results in a mismatch between $q_m^{\beta \to \alpha}$ and $q_{m\ app}^{\beta \to \alpha}$. The second term called the balance flux $q_{m\ bal}^{\beta \to \alpha}$ accounts for this mismatch, which is transmitted through $\alpha$ to its neighboring elements on the other side of the interface $\alpha\beta$. This balance flux is applied for temperature evolution only when it is deposited in an element large enough to satisfy CFL constraint until which it is successively transmitted along the flux direction.

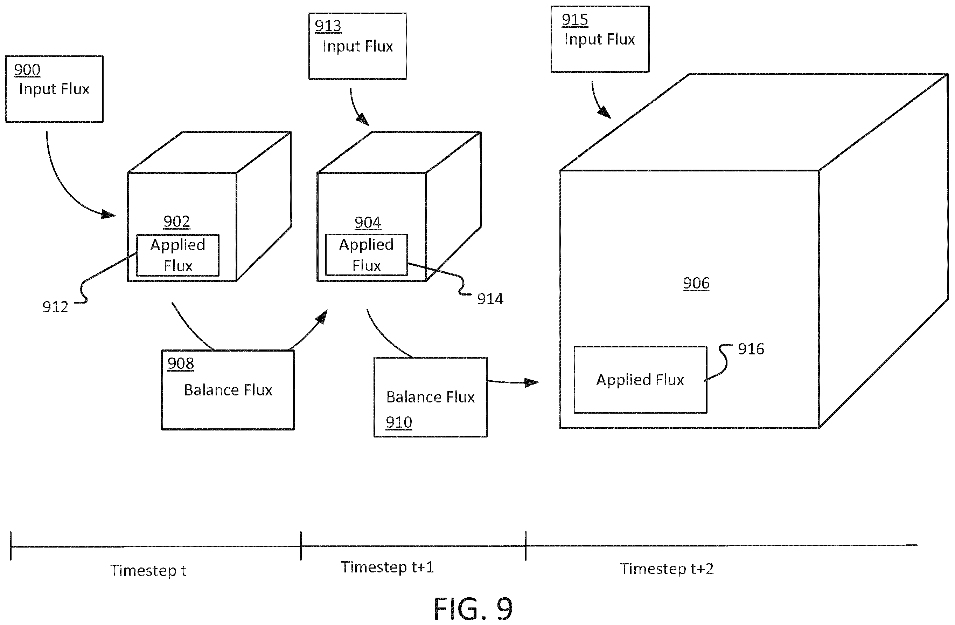

FIG. 9 illustrates and example of successively transmitting the balance flux across multiple elements. In this example, an input flux 900 is transferred to a relatively small element 902 at a timestep (in this example, timestep t). The flux is such that applying the entire flux to the element 902 would result in a violation of the CFL constraints. Accordingly, a portion of the flux 912 is applied to the element 902 and a balance flux 908 (that is, the portion of the flux that cannot be applied to the element 902 without violating the CFL constraint) is passed to a second element 904 (for example, at timeset t+1).

At the timestep, t+1, the simulation may attempt to apply the balance flux to the second element 904. Additional input flux 912 may also be applied to the second element 904 at the same time (for example, originating from different elements). The input flux 913 may be aggregated with the balance flux 908. The simulation may attempt to apply the resulting aggregated flux to second element 904. In this example, the applying the entire aggregated flux to the second element 904 would result in a violation of the CFL contraints. Accordingly, a portion of the combination of the input flux 915 and the balance flux 908 is applied to the second element 904 and the new balance flux 910 is passed on, at time step t+2 to the larger third element 906.

At timestep t+2, the balance flux 910 is aggregated with the flux 914 (which is flux that is passed to the third element 906 as part of the simulation). In this example, the entire aggregated flux 916 (the flux 914 and the balance flux 910) can be applied to the third element without violating the CFL constraint, and therefore no new balance flux is generated.

The above scheme rigorously ensures that at the interface between any two elements $\alpha$ and $\beta$ the correct amount of total flux $\left(= q_m^{\beta \to \alpha}\right)$ is incorporated, while precisely controlling the amount of flux available for temperature evolution of small element $\alpha$. Overall, this scheme is able to maintain numerical stability, as well as good spatial and temporal accuracy. Finally it should be noted that, at steady state, the applied flux becomes equal to the full flux,

$$q_m^{\beta \to \alpha}{}_{app} = q_m^{\beta \to \alpha}, \text{ and, as a consequence, the balance flux becomes equal to zero, } q_m^{\beta \to \alpha}{}_{bal} = 0.$$

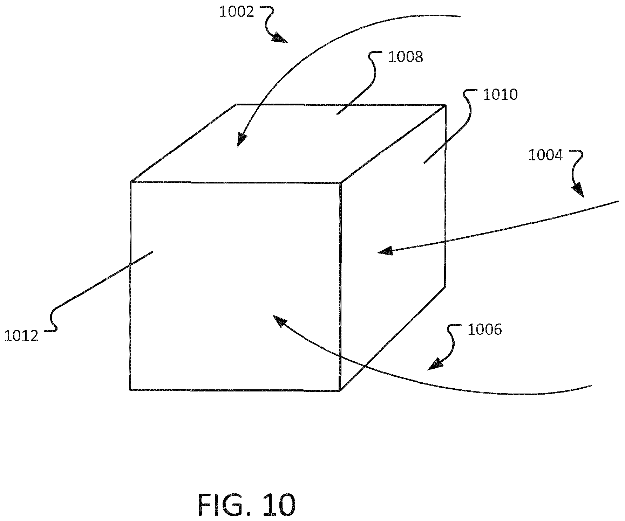

As noted in the above description, a process to stabilize explicit numerical schemes for diffusion problems on irregular spatial grids can include several algorithmic steps. FIG. 10 illustrates an element 1000 during the application of heat flux.

The process can identify the faces at which the modified definition of heat flux is to be applied - any face between two elements at least one of which violates the CFL condition this criterion. In some implementations, at all other faces, the standard definition of heat flux can be used. For example, referring to FIG. 10, in this example, heat flux is applied to three faces of the element 1000 (face 1008, face 1010, and face 1012). In this example, the process can calculate that the heat flux 1002 applied to face 1008 can use the standard definition, while the heat flux 1004 applied to face 1010 and heat flux 1006 applied to face 1012 require the modified definition to heat flux.

At faces requiring the modified heat flux, the process can comput the total heat flux amount using a spatially averaged temperature gradient in the vicinity of the elements under consideration to ensure smoothness of solution. In contrast, the standard heat flux can utilize a temperature gradient computed based on the traditional difference form.

As described above, the modified heat flux can be partitioned into two parts - an applied flux and a balance flux. The applied flux can be used in the temperature evolution equation of the element under consideration. The balance flux may or may not be used in the temperature evolution depending on the size of the element. If the element is small enough to violate the CFL constraint, the balance flux may be transmitted to the neighboring elements in the direction of the flux. If on the other hand, the element is large, the balance flux may be used towards temperature evolution.

As described above, the balance flux can be successively transmitted along the direction of the flux till it is eventually transferred to a large enough element (where it gets applied towards temperature evolution).

Currently, a few approaches are adopted to overcome the issue of numerical instability in diffusion problems on irregular grids with varying element sizes. The most commonly used approach is to enforce additional constraints on the grid generation tool to reduce such scenarios. Even then, since the issue cannot be completely avoided, it is common practice to use either a global time-step, which is small enough to ensure stability or to use local sub-cycling when small grid elements are encountered. The first approach (small global time-step) substantially increases the computational cost even if there is a single occurrence of small sized element anywhere on the spatial grid while the second approach (local sub-cycling) increases the complexity of the algorithm and its implementation. An alternative approach is to abandon the explicit scheme altogether, or at least in the local region close to the small elements, and use an implicit scheme instead. This approach suffers from the complexity of implementation of an implicit scheme as well as the non-local nature of the solution which results in systems of equations which are not convenient for parallelization.

In contrast, the new approach offers several distinct advantages:

(1) The approach allows use of a single time-step size decided based on the time accuracy considerations rather than the size of the smallest element in the grid. For every conceivable scenario, this is a huge benefit in terms of computational cost and ease of implementation.
(2) The proposed approach has a dependence on the geometric properties of the two neighboring elements, thus ensuring that this approach would work irrespective of the size of the elements. Thus, the usual constraints on grid generation process (grid quality, size, etc.) can be relaxed to a large degree.
(3) The computational cost of computing the new terms is very reasonable. The mathematical form of the term is simple, and does not involve any iteration. This is in sharp contrast to the existing approaches (reducing time-step size or using a hybrid implicit-explicit scheme) which dramatically increase the computational costs.
(4) Due to the volumetric nature of the formulation, the scheme maintains exact conservation which is an important requirement in many applications.
(5) The new changes are still explicit in nature and require information from elements within a small distance from the element under consideration, which implies that minimal changes are needed on the computational stencil from the original implementation. Therefore, the parallelization characteristics of the original explicit method are retained and can be taken advantage of in massive computations.

The new approach can be used in a wide variety of different industrial applications. For example, the approach can be use to simulate heat flow in power generation equipment like engines; heat flow in turbo machinery; heat flow in electromagnetic machinery (alternators, starters, traction motors, various actuators in powertrain and cabin); waste heat management from electronic equipment; thermal management and protection of sensors and actuators; thermal driven stress and fatigue; thermal driven mechanical shock; thermal driven chemical changes in solids (e.g. plastic aging, glue curing, paint curing, thermosetting); thermal driven demagnetization (e.g. Curie temperature effects); combined electrical heat generation and heat flow in conductors (e.g. in power cables); heat generation and conduction in semiconductors (e.g. across diodes, IGBTs, FETs); heat and current flow in thermoelectric devices (thermocouples, Seebeck effect); thermal driven dimensional changes; heat sinks; solid conduction in heat exchangers; thermal energy storage in single phase and phase change materials; detailed heat flow in composite structures like PCBs, tires, and reinforced concrete; electic heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation. Furthermore, the above list is not exhaustive, but is instead representative of the kinds of applications that can use the approach described herein.

Embodiments of the subject matter and the functional operations described in this specification can be implemented in digital electronic circuitry, tangibly-embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that creates an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry (e.g., an FPGA (field programmable gate array) or an ASIC (application-specific integrated circuit)).

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data (e.g., magnetic, magneto-optical disks, or optical disks), however, a computer need not have such devices. Moreover, a computer can be embedded in another device (e.g., a mobile telephone, a personal digital assistant (PDA), a mobile audio or video player, a game console, a Global Positioning System (GPS) receiver, or a portable storage device (e.g., a universal serial bus (USB) flash drive), to name just a few).

Computer-readable media suitable for storing computer program instructions and data include all forms of nonvolatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback) and input from the user can be received in any form, including acoustic, speech, or tactile input. In addition, a computer can interact with a user by sending documents to and receiving documents from a device that is used by the user, for example, by sending web pages to a web browser on a user's device in response to requests received from the web browser.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

While this specification contains many specific implementation details, these should not be construed as limitations on the scope of any invention or on the scope of what can be claimed, but rather as descriptions of features that can be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

**Embodiments**

Although the present invention is defined in the attached claims, it should be understood that the present invention can also (alternatively) be defined in accordance with the following embodiments:

1. A computer-implemented method for simulating a physical process comprising the steps of:

determining an input flux to be applied to a first element;
determining an applied flux, the applied flux being an amount of flux that can be applied to the first element without causing numerical instability;
determining a balance flux, the balance flux being the difference between the input flux and the applied flux; and
providing the balance flux to a second element.

2. The method of embodiment 1, wherein the second element is determined based on the direction of a scalar gradient.

3. The method of embodiment 1, further comprising providing at least a portion of the balance flux to a third element.

4. The method of embodiment 1, wherein determining an input flux to be applied to a first element comprises identifying heat flux applied to each of the faces of the first elements

5. The method of embodiment 4, wherein determining an applied flux comprises determining that applying the corresponding heat flux to at least one of the faces would result in a numerical instability.

6. The method of embodiment 1, wherein the physical process is one of heat flow in power generation equipment like engines; heat flow in turbo machinery; heat flow in electromagnetic machinery; waste heat management from electronic equipment; thermal management and protection of sensors and actuators; thermal driven stress and fatigue; thermal driven mechanical shock; thermal driven chemical changes in solids; thermal driven demagnetization; combined electrical heat generation and heat flow in conductors; heat generation and conduction in semiconductors; heat and current flow in thermoelectric devices; thermal driven dimensional changes; heat sinks; solid conduction in heat exchangers; thermal energy storage in single phase and phase change materials; detailed heat flow in composite structures like PCBs, tires, and reinforced concrete; electic heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation.

7. A non-transitory computer readable medium storing instructions that when executed cause a computer processor to perform operations comprising:

determining an input flux to be applied to a first element;
determining an applied flux, the applied flux being an amount of flux that can be applied to the first element without causing numerical instability;
determining a balance flux, the balance flux being the difference between the input flux and the applied flux; and providing the balance flux to a second element.

8. The non-transitory computer readable medium of embodiment 7, wherein the second element is determined based on the direction of a scalar gradient.

9. The non-transitory computer readable medium of embodiment 7, further comprising providing at least a portion of the balance flux to a third element.

10. The non-transitory computer readable medium of embodiment 7, wherein determining an input flux to be applied to a first element comprises identifying heat flux applied to each of the faces of the first elements

11. The non-transitory computer readable medium of embodiment 10, wherein determining an applied flux comprises determining that applying the corresponding heat flux to at least one of the faces would result in a numerical instability.

12. The non-transitory computer readable medium of embodiment 7, wherein the physical process is one of heat flow in power generation equipment like engines; heat flow in turbo machinery; heat flow in electromagnetic machinery; waste heat management from electronic equipment; thermal management and protection of sensors and actuators; thermal driven stress and fatigue; thermal driven mechanical shock; thermal driven chemical changes in solids; thermal driven demagnetization; combined electrical heat generation and heat flow in conductors; heat generation and conduction in semiconductors; heat and current flow in thermoelectric devices; thermal driven dimensional changes; heat sinks; solid conduction in heat exchangers; thermal energy storage in single phase and phase change materials; detailed heat flow in composite structures like PCBs, tires, and reinforced concrete; electic heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation.

13. A system for simulating a physical process, comprising one or more processing devices and one or more hardware storage devices storing instructions that are operable, when executed by the one or more processing devices, to cause the one or more processing devices to perform operations comprising:

determining an input flux to be applied to a first element;
determining an applied flux, the applied flux being an amount of flux that can be applied to the first element without causing numerical instability;

determining a balance flux, the balance flux being the difference between the input flux and the applied flux; and providing the balance flux to a second element.

14. The system of embodiment 13, wherein the second element is determined based on the direction of a scalar gradient.

15. The system of embodiment 13, further comprising providing at least a portion of the balance flux to a third element.

16. The system of embodiment 13, wherein determining an input flux to be applied to a first element comprises identifying heat flux applied to each of the faces of the first elements

17. The system of embodiment 16, wherein determining an applied flux comprises determining that applying the corresponding heat flux to at least one of the faces would result in a numerical instability.

18. The system of embodiment 13, wherein the physical process is one of heat flow in power generation equipment like engines; heat flow in turbo machinery; heat flow in electromagnetic machinery; waste heat management from electronic equipment; thermal management and protection of sensors and actuators; thermal driven stress and fatigue; thermal driven mechanical shock; thermal driven chemical changes in solids; thermal driven demagnetization; combined electrical heat generation and heat flow in conductors; heat generation and conduction in semiconductors; heat and current flow in thermoelectric devices; thermal driven dimensional changes; heat sinks; solid conduction in heat exchangers; thermal energy storage in single phase and phase change materials; detailed heat flow in composite structures like PCBs, tires, and reinforced concrete; electric heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation.

## Claims

1. A computer-implemented method for simulating a physical process comprising the steps of:

   determining an input flux to be applied to a first element;
   determining an applied flux, the applied flux being an amount of flux that can be applied to the first element without causing numerical instability;
   determining a balance flux, the balance flux being the difference between the input flux and the applied flux; and providing the balance flux to a second element.

2. The method of claim 1, wherein the second element is determined based on the direction of a scalar gradient.

3. The method of claim 1, further comprising providing at least a portion of the balance flux to a third element.

4. The method of claim 1, wherein determining an input flux to be applied to a first element comprises identifying heat flux applied to each of the faces of the first elements

5. The method of claim 4, wherein determining an applied flux comprises determining that applying the corresponding heat flux to at least one of the faces would result in a numerical instability.

6. The method of claim 1, wherein the physical process is one of heat flow in power generation equipment like engines; heat flow in turbo machinery; heat flow in electromagnetic machinery; waste heat management from electronic equipment; thermal management and protection of sensors and actuators; thermal driven stress and fatigue; thermal driven mechanical shock; thermal driven chemical changes in solids; thermal driven demagnetization; combined electrical heat generation and heat flow in conductors; heat generation and conduction in semiconductors; heat and current flow in thermoelectric devices; thermal driven dimensional changes; heat sinks; solid conduction in heat exchangers; thermal energy storage in single phase and phase change materials; detailed heat flow in composite structures like PCBs, tires, and reinforced concrete; electic heaters used for engine blocks, sensors, catalysts, steering wheels, car seats, and batteries on automobiles; electric heaters used for deicing and defrosting on automobile windshields and mirrors; and conduction of heat through vehicle structures in manufacture and operation.

7. A non-transitory computer readable medium storing instructions that when executed cause a computer processor to perform operations comprising the method of any one of claims 1 to 6.

8. A system for simulating a physical process, comprising one or more processing devices and one or more hardware storage devices storing instructions that are operable, when executed by the one or more processing devices, to cause the one or more processing devices to perform operations comprising the method of any one of claims 1 to 6.

FIG. 1

FIG. 2

FIG. 3

FIG. 4

FIG. 5A

FIG. 5B

650

660 655 665

FIG. 6

780 770 775 785

780

FIG. 7

FIG. 8

FIG. 9

1004

1010

1008

1002

1006

1012

FIG. 10

Europäisches
Patentamt

European
Patent Office

Office européen
des brevets

## EUROPEAN SEARCH REPORT

Application Number

EP 19 19 0946

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/151221 A1 (CHEN HUDONG [US] ET AL) 13 June 2013 (2013-06-13) <br> * paragraphs [0082] - [0088] * <br> * paragraphs [0139] - [0152] * <br> * paragraphs [0211] - [0217] * <br> ----- | 1-8 | INV. <br> G06F17/50 |
| X | US 2016/188768 A1 (GOPALAKRISHNAN PRADEEP [US] ET AL) 30 June 2016 (2016-06-30) <br> * paragraphs [0002] - [0020] * <br> * paragraphs [0110] - [0119] * <br> * paragraphs [0078] - [0098] * <br> ----- | 1-8 | |
| A | MCNAMARA G R ET AL: "Stabilization of thermal lattice Boltzmann models", JOURNAL OF STATISTICAL PHYSICS USA, vol. 81, no. 1-2, October 1995 (1995-10), pages 395-408, XP002796107, ISSN: 0022-4715 <br> * the whole document * <br> ----- | 1-8 | |

TECHNICAL FIELDS
SEARCHED      (IPC)

G06F

The present search report has been drawn up for all claims

| Place of search | Date of completion of the search | Examiner |
|---|---|---|
| Munich | 28 November 2019 | Gafita, Cristinel |

EPO FORM 1503 03.82 (P04C01)

**ANNEX TO THE EUROPEAN SEARCH REPORT
ON EUROPEAN PATENT APPLICATION NO.**

EP 19 19 0946

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2019

| Patent document cited in search report | | Publication date | Patent family member(s) | | Publication date |
|---|---|---|---|---|---|
| US 2013151221 | A1 | 13-06-2013 | AU | 2012348365 A1 | 29-05-2014 |
| | | | AU | 2018203940 A1 | 21-06-2018 |
| | | | CA | 2853625 A1 | 13-06-2013 |
| | | | EP | 2788916 A1 | 15-10-2014 |
| | | | JP | 6097762 B2 | 15-03-2017 |
| | | | JP | 2015507778 A | 12-03-2015 |
| | | | US | 2013151221 A1 | 13-06-2013 |
| | | | WO | 2013085567 A1 | 13-06-2013 |
| US 2016188768 | A1 | 30-06-2016 | AU | 2014296132 A1 | 18-02-2016 |
| | | | CA | 2919229 A1 | 05-02-2015 |
| | | | CN | 105706076 A | 22-06-2016 |
| | | | EP | 3028178 A2 | 08-06-2016 |
| | | | JP | 6434512 B2 | 05-12-2018 |
| | | | JP | 2016528628 A | 15-09-2016 |
| | | | JP | 2019053752 A | 04-04-2019 |
| | | | US | 2016188768 A1 | 30-06-2016 |
| | | | WO | 2015017648 A2 | 05-02-2015 |

EPO FORM P0459

For more details about this annex : see Official Journal of the European Patent Office, No. 12/82